# EUROPEAN PATENT APPLICATION

(11) **EP 4 497 575 A1**
(43) Date of publication of application: **29.01.2025**
(21) Application number: 24191456.3
(22) Date of filing: 29.07.2024
(51) Int. Cl.: B29C 64/386, B22F 10/80, B29C 64/40, B33Y 10/00, B33Y 50/00

(54) **SIDE SUPPORTS FOR TALL PARTS**

(30) Priority: 28.07.2023 US 202363529407 P; 26.07.2024 US 202418785523
(71) Applicant: Markforged, Inc., Waltham, MA 02451 (US)
(72) Inventor: Nawada, Suhas, Waltham, 02451 (US)
(74) Representative: Slingsby Partners LLP

(57) **Abstract**

Methods of printing parts, e.g., using a 3D printer, are disclosed. The methods include receiving a representation of a part to be printed. The methods include analyzing the representation along one or more of an X-Y plane, X-Z plane, and Y-Z plane to identify an aspect ratio of the part. The methods include comparing the aspect ratio to a threshold value. The methods further include determining that a support structure for the part is needed based on the comparison of the aspect ratio to the threshold value. The methods additionally include providing instructions to a 3D printer to print the part including the support structure.

## Description

### FIELD OF TECHNOLOGY

Aspects and embodiments disclosed herein relate to methods for 3D printing tall parts with reduced defects.

### SUMMARY

In accordance with an aspect, there is provided a method of printing a part. The method may include receiving a representation of a part to be printed. The method may include analyzing the representation along one or more of an X-Y plane, X-Z plane, and Y-Z plane to identify an aspect ratio of the part. The method may include comparing the aspect ratio to a threshold value. The method further may include determining that a support structure for the part is needed based on the comparison of the aspect ratio to the threshold value. The method additionally may include providing instructions to a 3D printer to print the part including the support structure.

In further embodiments, the method may include prompting a user to select whether to provide the instructions to the 3D printer. The instructions to the 3D printer may be provided following the user choosing to provide the instructions to the 3D printer.

In some embodiments, the support structure may include a support that extends along the Z-axis of the printed part. In particular embodiments, the support structure extending along the Z-axis of the printed part may be a lattice support. In particular embodiments, the support structure extending along the Z-axis of the printed part may be an arch support. In particular embodiments, the support structure extending along the Z-axis of the printed part may be a full support.

### BRIEF DESCRIPTION OF THE DRAWINGS

The accompanying drawings are not drawn to scale. In the drawings, each identical or nearly identical component that is illustrated in the various figures is represented by a like numeral. For purposes of clarity, not every component may be labeled in every drawing. In the drawings:
FIG. 1 illustrates a failure mode of a tall vertical beam printed using 3D printing;
FIG. 2 illustrates an example of a tall part surrounded on all sides by a printed support, according to an embodiment;
FIG. 3 includes a flow chart illustrating a process for determining whether a part being printed requires a support, according to an embodiment;
FIG. 4 illustrates example support geometries and material usage, according to an embodiment;
FIG. 5 illustrates example support geometries for a straight vertical panel and resulting defects, according to an embodiment;
FIGS. 6A-6B illustrate a comparison of the side surface profiles for depth (FIG. 6A) and flex (FIG. 6B) in panels printed with and without supports;
FIG. 7 compares the warping in different regions of vertical panels printed with different support geometries, according to an embodiment; and
FIGS. 8A-8B compares the maximum flexure stress (FIG. 8A) and modulus (FIG. 8B) for vertical panels printed with different support geometries, according to an embodiment.

The features and advantages of the disclosure are apparent from the detailed specification, and thus, it is intended that the appended claims cover all systems and methods falling within the true spirit and scope of the disclosure. As used herein, the indefinite articles "a" and "an" mean "at least one" or "one or more." Similarly, the use of a plural term does not necessarily denote a plurality unless it is unambiguous in the given context. Words such as "and" or "or" mean "and/or" unless specifically directed otherwise. In this application, the terms "comprising" and "including" may be understood to encompass itemized components or steps whether presented by themselves or together with one or more additional components or steps. Unless otherwise stated, the terms "about" and "approximately" may be understood to permit standard variation as would be understood by those of ordinary skill in the art. Where ranges are provided herein, the endpoints are included. As used in this application, the term "comprise" and variations of the term, such as "comprising" and "comprises," are not intended to exclude other additives, components, integers or steps.

As used in this application, the terms "about" and "approximately" are used as equivalents. Any numerals used in this application with or without about/approximately are meant to cover any normal fluctuations appreciated by one of ordinary skill in the relevant art. In certain embodiments, the term "approximately" or "about" refers to a range of values that fall within 25%, 20%, 19%, 18%, 17%, 16%, 15%, 14%, 13%, 12%, 11%, 10%, 9%, 8%, 7%, 6%, 5%, 4%, 3%, 2%, 1%, or less in either direction (greater than or less than) of the stated reference value unless otherwise stated or otherwise evident from the context (except where such number would exceed 100% of a possible value).

Many methodologies described herein include a step of "determining." Those of ordinary skill in the art, reading the present specification, will appreciate that such "determining" can utilize or be accomplished through use of any of a variety of techniques available to those skilled in the art, including for example specific techniques explicitly referred to herein. In some embodiments, determining involves manipulation of a physical sample. In some embodiments, determining involves consideration and/or manipulation of data or information, for example utilizing a computer or other processing unit adapted to perform a relevant analysis. In some embodiments, determining involves receiving relevant information and/or materials from a source. In some embodiments, determining involves comparing one or more features of a sample or entity to a comparable reference.

As used herein, the term "substantially," and grammatic equivalents, refer to the qualitative condition of exhibiting total or near-total extent or degree of a characteristic or property of interest. One of ordinary skill in the art will understand that chemical phenomena rarely, if ever, go to completion and/or proceed to completeness or achieve or avoid an absolute result.

### DETAILED DESCRIPTION

Additive manufacturing, sometimes more generally known as three-dimensional printing, refers to a class of technologies for the direct fabrication of physical products from a three-dimensional computer model by a layered manufacturing process. In contrast to material removal processes in traditional subtractive manufacturing, the three-dimensional printing process adds material. In additive manufacturing, 3D parts are manufactured by adding layer-upon-layer of material. For example, an additive manufacturing-based 3D printing device can create a 3D part, based on a digital representation of the part, by depositing a part material along toolpaths in a layer-by-layer manner. This process can enable the direct printing of products with extremely complex geometry.

Fused Deposition Modeling (FDM), also referred to as Fused Filament Fabrication (FFF), is an example of additive manufacturing technology used for modeling, production, and prototyping. In an FDM or FFF additive manufacturing process, a moving print head deposits a filament of material onto a print bed or to an object being printed. The print head and/or the print bed can move relative to each other under computer control to define the printed object. Additive manufacturing of a layer generally involves slicing a two-dimensional layer into a series of shells, that is beads, lines, or shells that are stacked on top of one another (that is, along the Z-axis) forming a digital representation of the intended part. The printing of a layer is typically done shell-by-shell on a build plate or print bed until the one or more shells (i.e., the plurality of shells) are complete, e.g., by incrementing the position of the print head relative to the build plate or print bed along one or more print axes. For example, each two-dimensional layer may have a number of shells lining a contour, such as a perimeter of a wall. This process can then be repeated to form an object, i.e., a three-dimensional part, resembling the digital representation. The process of depositing shells is typically in a machine-controlled manner according to slicing parameters. Additionally, for example, printing of subsequent shells may include depositing by tracing along a contour or path defined by a prior printed shell. A result of such a process can be a repeatable and consistent deposition. Moreover, each two-dimensional layer may have a different fill pattern filling the interior of the part. Additionally, a fill pattern may be deposited between an inner and an outer perimeter of a wall.

In an FDM or FFF manufacturing system, a three-dimensional part or model may be printed from a digital representation of the three-dimensional part in a layer-by-layer manner by depositing part material along toolpaths.

The print head can move in two dimensions to deposit part material in one horizontal plane or a layer of the object being printed. Then, the print head or the print bed can be moved vertically by a small amount to begin another horizontal plane, a new layer of the object. The part material is deposited through a nozzle carried by a print head of a three-dimensional printing apparatus, device, or system. Part material is deposited as a sequence of roads on a substrate in a build plane. A layer, for example, a first layer of a printable material is deposited onto the build surface. That is, for example, a horizontal layer is printed with movement in the X-Y axis. Once this first horizontal layer is completed, a height adjustment is made in the Z-axis and another horizontal layer can be printed with movement in the X-Y axis. Once the next horizontal layer is completed, another height adjustment is made in the Z-axis. This process continues, for each layer until the object is completed. When depositing the layers of the part material, the print head uses a downward force to the part material applied by the nozzle. This downward force, in conjunction with the heat applied by the print head to the nozzle, acts to ensure that the part material is secured to the structure it is applied to, e.g., a build platen or a preceding layer of the part material.

Recent advances in FFF printer technology now permit the printing of relatively large parts, e.g., taller parts in the Z-direction. The printing of vertically tall, but radially unstable, parts poses challenges for FFF systems. For example, as discussed above, printing using FFF methods can apply a downward pressure from the print head of the 3D printer to a previously deposited layer to secure the filament being deposited with good adhesion. When the height in the Z-direction of the part is smaller, the downward pressure from the print head generally does not cause the deposited layers to warp or otherwise deflect. However, as a printer part increases in height along the Z-axis, the part, if unsupported, can become radially unstable about its base. This radial instability can be exacerbated by the downward force applied by a print head, as this downward force can deflect parts that are taller, even if they are well-supported at their base.

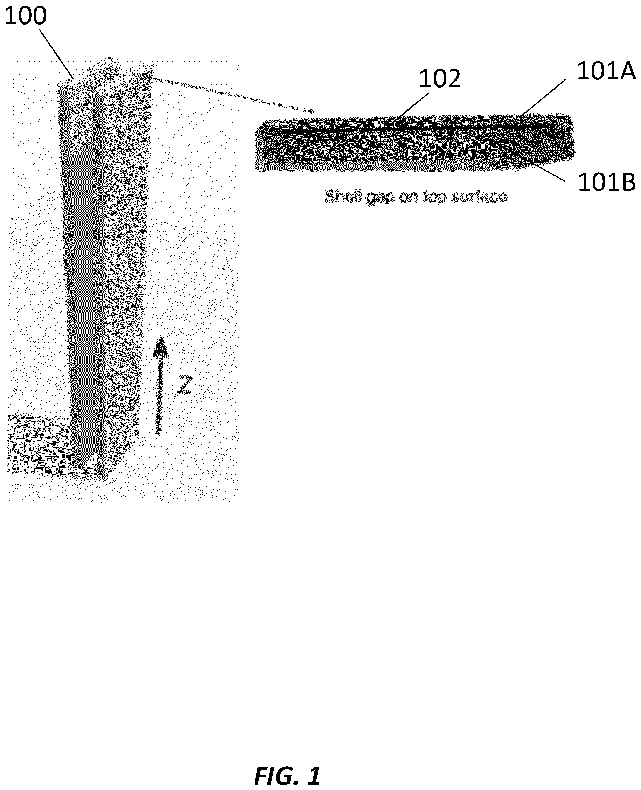

Taller parts can potentially suffer from distinct failure modes during printing processes. In some cases, taller parts fail to finish printing using traditional FFF printing methods. The downforce applied by a print head to bond the next printed layer can lead to parts falling over during printing, resulting in failed prints. Small deflections in the printed part as it is printing are also damaging to fiber print success, as continuous fiber printing generally requires tight tolerances in the Z-axis, e.g., about +/- 25 µm, and the X-Y plane, e.g., about 100 µm. These deflections can propagate and compound along the height of the printed part to create continuous defects, rendering the final part out of specification or otherwise unusable. As example of these defects is shown in FIG. 1. In FIG. 1, the part 100 is a vertical beam where a radial deflection propagated along the Z-axis, creating a gap 102 between the infill 101B and the perimeter 101A of the vertical beam part 100. Horizontal reinforcements can provide increased Z-direction strength and greater dimensional accuracy for taller parts that allow for increased completion rates unable to be achieves without these reinforcements. It is an object of this disclosure to provide systems and methods for printing taller parts that are supported to minimizes radial deflection.

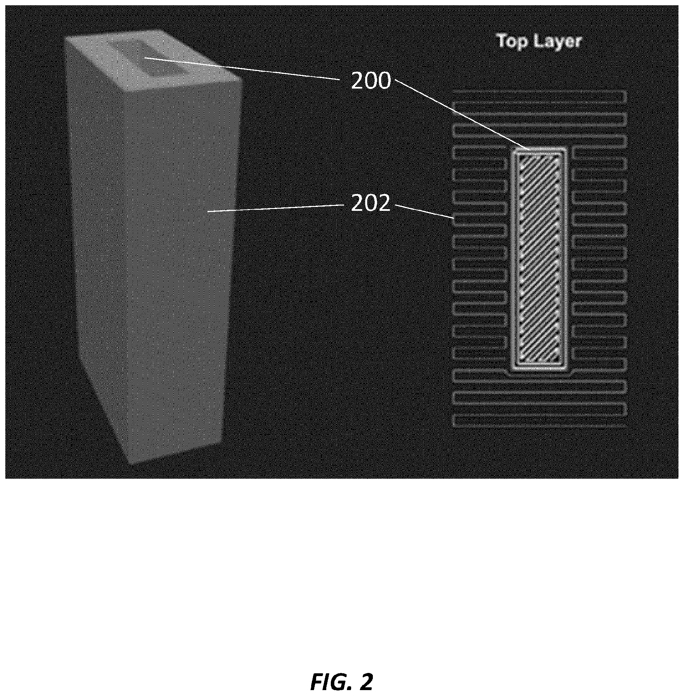

In accordance with an aspect, there is provided a method of printing parts that have increased vertical support during printing. These supports are deposited radially away from the part being printed as horizontal reinforcement and propagate vertically along with the part as the Z-direction height of the print head is increased. Without wishing to be bound by any particular theory, horizontally reinforcing parts while printing using FFF has been shown to increase print completion with the printed parts demonstrating greater dimensional accuracy and z-strengths and reinforcing supports radially stabilize parts for tall geometries. A simplified illustration of the method disclosed herein is shown in FIG. 2. In FIG. 2, the part 200 to be printed is the rectangle, and the support is provided by the accordion support structure 202 illustrated along the perimeter and the full height of the part 200. This enveloping of the part 200 by the support structure 202 would have the same considerations as any other type of support, e.g., ease of removal and close tolerances to the part being printed.

3D printers are generally controlled and operated by a controller that includes one or more control program schemes that accept user-generated drawings of the desired part for printing and send a representation of the desired part to the printer for deposition. In operation, the controller for the 3D printer determines how to "slice" the representation of the desired part into a plurality of layers, with each layer being sequentially deposited. In an embodiment, the disclosed method can implement the addition of supports for tall parts by an initial analysis of the desired part. The controller can analyze the aspect ratio, i.e., the ratio of the width, i.e., X-axis, Y-axis, or both, to the height, i.e., Z-axis, of the part and determine if the part may potentially have radial instability as the part is printed. As an example, a part may become radially unstable should its height during printing exceed a threshold aspect ratio as determined by the controller. Under such a scenario, the downward force applied by the print head to deposit the next layer of the part may cause the part to topple or fall over the build platen. In some cases, exceeding the threshold aspect ratio as determined by the controller during printing may cause the part to form defects such as a bulged layer or have layers that are not fully attached to the preceding layer. If the controller determines that the part may become radially unstable during printing, the controller may automatically include a support as part of the printing. Alternatively, the controller may provide a prompt to a user that indicates the part may become radially unstable and recommending printing a support.

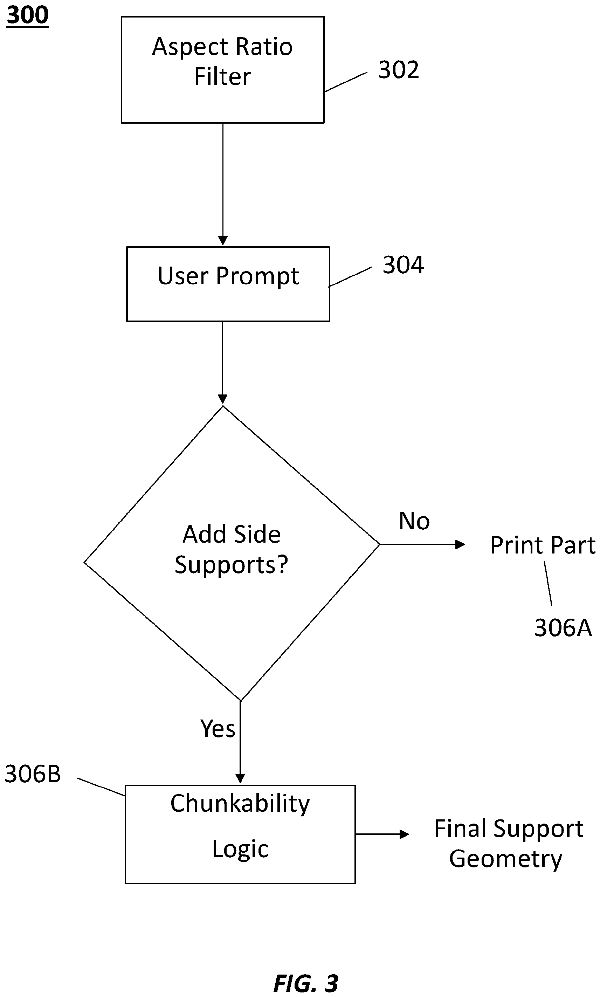

An example of such a method as implemented in a controller for a 3D printer is illustrated in FIG. 3. With reference to FIG. 3, method 300 includes the controller receiving a digital representation of the desired part and analyzing the aspect ratio, i.e., the ratio of the width, i.e., X-axis, Y-axis, or both, to the height, i.e., the Z-axis, of the part at step 302. The controller includes acceptable ranges of X-Z and Y-Z dimensions that minimize radial instability and thus determines if the desired part fits into the acceptable ranges. At step 304, the controller provides a prompt to the user or operator indicating that the desired part may become radially unstable during printing. The prompt provides the user or operator the choice to decline the addition of support or to accept the addition of supports. The prompt also provides the additional print time and material usage for supports if the printing of supports is selected. Should the user or operator select "No," the desired part is printed according to standard slicing and print commands step 306A. Should the user or operator select "Yes," the digital representation of the part is subject to a logic analysis at step 306B that determines the proper location and thickness of the optioned supports about the part. The optioned supports can have any suitable thickness that provides the necessary support to the part being printed. For example, the aspect ratio of the part, i.e., the ratio of the width, i.e., X-axis, Y-axis, or both, to the height, i.e., the Z-axis, may be used to determine the thickness of the support that is printed. In some cases, parts with a smaller aspect ratio, i.e., taller parts where the height in the Z-axis exceed the width in the X-Y plane, may require thicker supports as the height increases. The geometry and thickness of the supports may also be determined by other factors, including but not limited to, ease of support removal, support material volume, support material cost, other tolerances to be held in the final part, and the size of the 3D printer's build platen, among other factors. The final part geometry for printing is the combination of the geometry of the desired part and the geometry of the supports as determined by the controller.

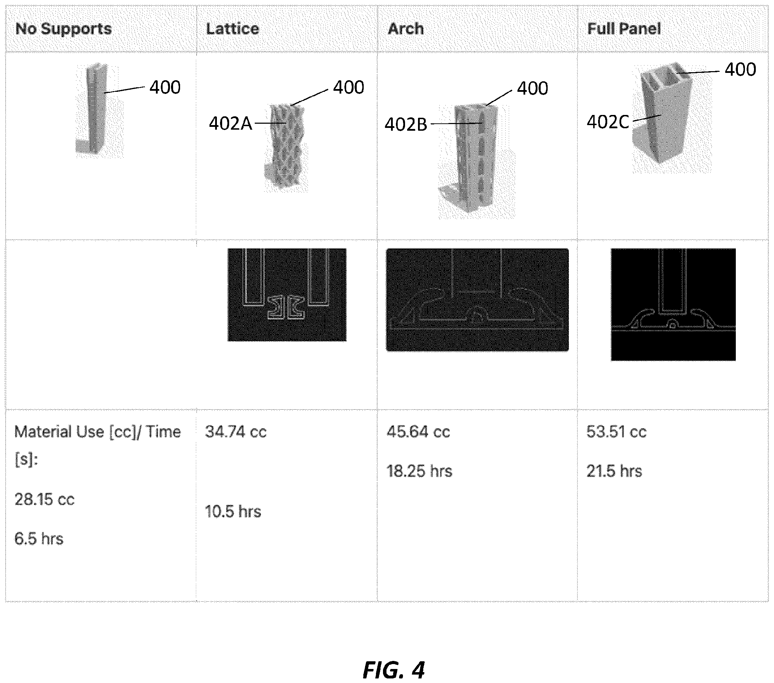

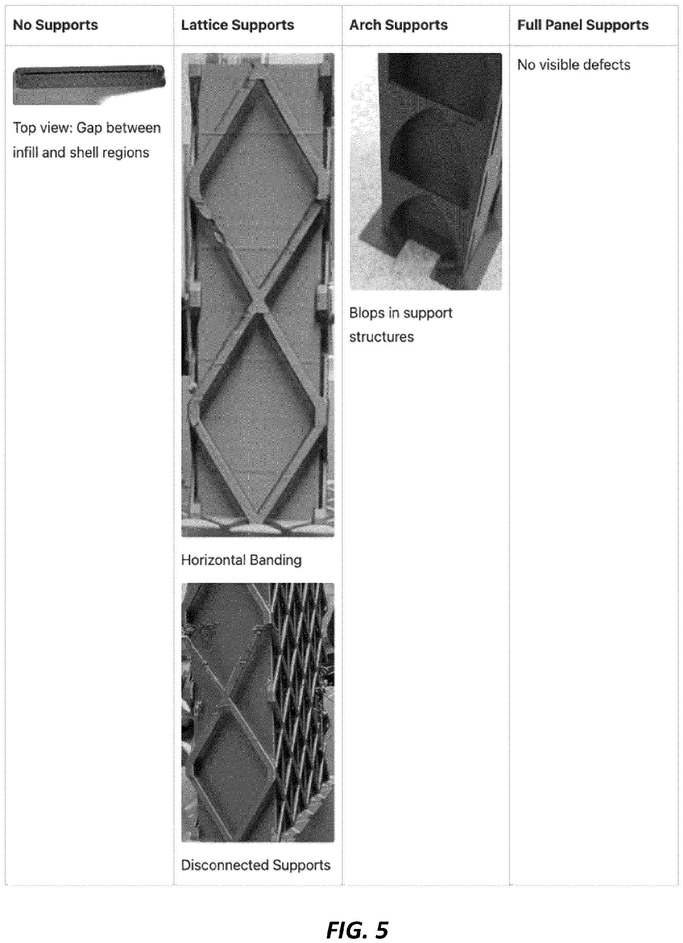

As disclosed herein, the supports to be printed with tall parts can have different print geometries, each of which has a varying material usage and print time. Examples of different support geometries are illustrated in FIGS. 4 and 5. With reference to FIG. 4, these example geometries for surrounding a part 400 include lattice printing 402A, arch printing 402B, and full panel printing 402C. Without wishing to be bound by any particular theory, lattices are the most open geometry and thus require the least amount of extra material and have the lowest print time. Arch lattices are between the lattice and full panel support geometries, using more material to print and taking more time to print. Full panels use the most material and take the longest time to print.

### EXAMPLES

The function and advantages of these and other embodiments can be better understood from the following examples. These examples are intended to be illustrative in nature and are not considered to be in any way limiting the scope of the invention.

FIG. 5 illustrates the print defects that may occur with the support geometries that can be used as supports for tall parts. A vertical beam having dimensions of 25.4 mm x 139.7 mm x 3.57 mm (w x h x t) was used as the printed part. The vertical beams were printed for side supports designed in CAD rather than using a slicer feature. The vertical beam printed without supports, seen in the leftmost image of FIG. 5, had a pronounced gap between the perimeter of the part and its infill material of about 0.3 mm formed as the downward force of the print head caused the part to flex radially about its base that was secured to the build platen of the 3D printer. The use of lattice supports resulted in two types of defects observed in the final printing. The first defect was horizontal banding between the supported regions, again due to the downward force of the print head during layer deposition. In some instances, the lattice pillars failed to connect to other pillars as intended. Removing the lattice supports further created visible damage to the printed parts. The arch supports represented an improvement over the lattice supports, as the parts printed with arch supports had no noticeable defects on the parts themselves other than minor horizontal banding in the unsupported regions. The arch supports produced minor dips in the material of the support structure, but the dips did not impact the final part quality. Parts printed with full panel supports had no defects on either the support or the part. In general, the beams were printed with high print completion rates and minimal part quality defects compared to previous print geometries.

In addition to the identification of visible defects, the surface depth profiles of the different support geometries attached to the printed part were measured. Specifically, the surface profiles of the different support geometries attached to the printed part were measured: 1) along the center of the vertical beam; 2) along the points of contact with the support structure; and 3) along an edge of the vertical beam, with all surface profiles taken along the Z-axis using a Keyence VL 500 3D scanner. To measure the mechanical performance of the parts printed with the side supports, five coupon shaped samples were printed on a Markforged X7 printer (Waltham, MA) with a carbon fiber composite filament and were dry conditioned per published protocols. The printed and conditioned samples were then tested on an Instron (Norwood, MA) under the ASTM D790 standard with a 58 mm support span.

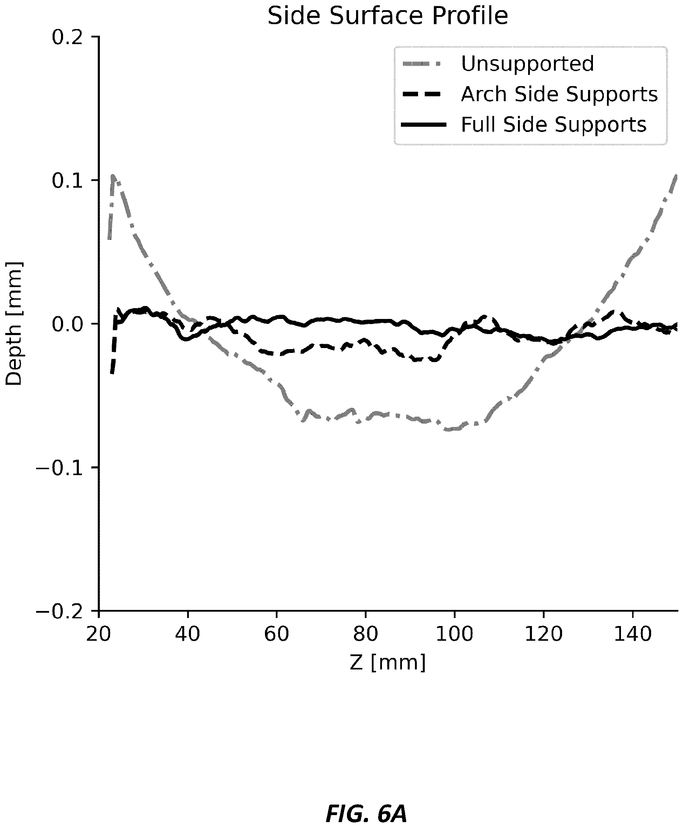

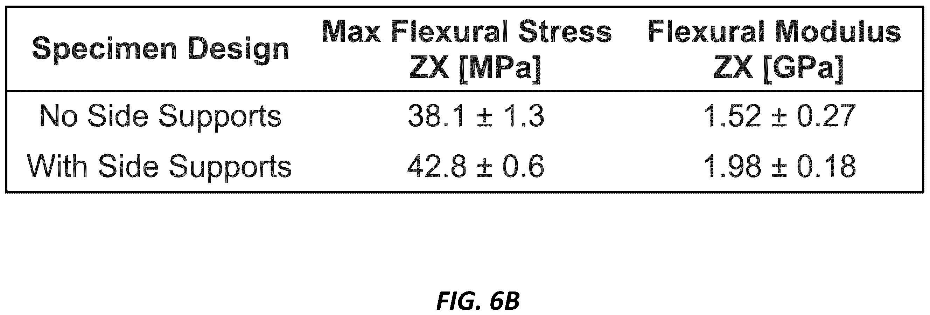

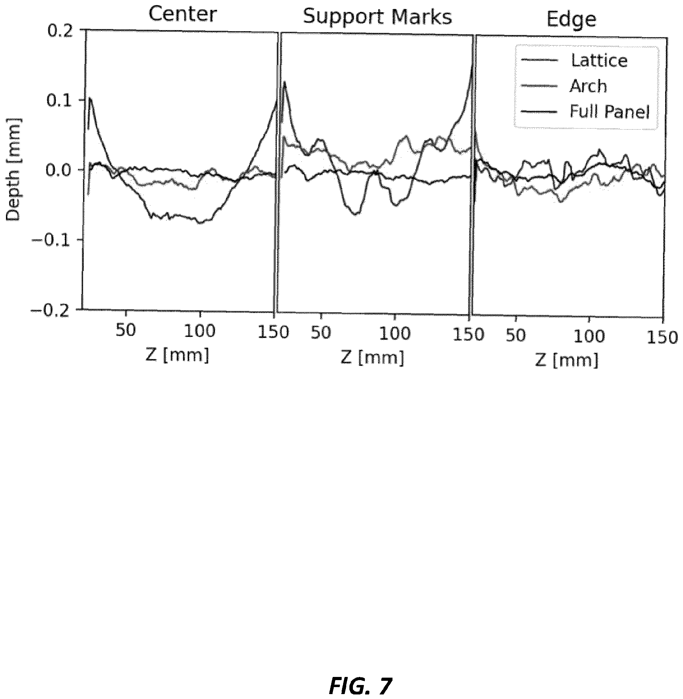

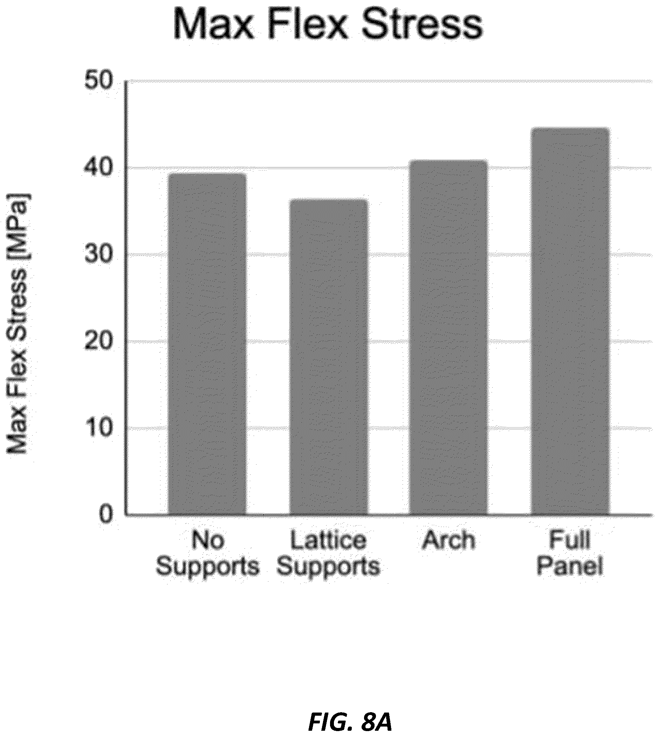

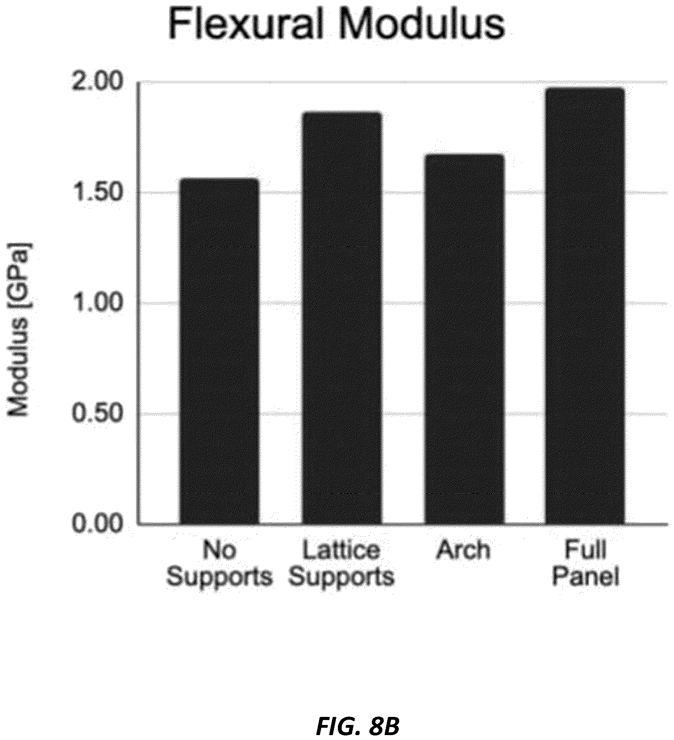

As is illustrated in FIGS. 6A-8B, vertical beams printed without any supports had the greatest deflections in depth along the Z-axis and the lowest maximum flex stress and flex modulus of all vertical beams analyzed. Vertical beams made using lattice supports showed significant warping compared to arch and full panel supports, which were largely the same across their surfaces independent of the measurement location. In addition, large indentations and marks were present in the points of contact with the support lattice. As expected, full panel supports created panels with the best dimensional accuracy along the three measured lines. Arch supports were close in performance to full panel supports at all three measurement locations.

The phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of' and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Having thus described several aspects of at least one embodiment, it is to be appreciated various alterations, modifications, and improvements will readily occur to those skilled in the art. Any feature described in any embodiment may be included in or substituted for any feature of any other embodiment. Such alterations, modifications, and improvements are intended to be part of this disclosure and are intended to be within the scope of the invention. Accordingly, the foregoing description and drawings are by way of example only.

Those skilled in the art should appreciate that the parameters and configurations described herein are exemplary and that actual parameters and/or configurations will depend on the specific application in which the disclosed methods and materials are used. Those skilled in the art should also recognize or be able to ascertain, using no more than routine experimentation, equivalents to the specific embodiments disclosed.

## Claims

1. A method of printing a part, comprising:
receiving a representation of a part to be printed;
analyzing the representation along one or more of an X-Y plane, X-Z plane, and Y-Z plane to identify an aspect ratio of the part;
comparing the aspect ratio to a threshold value;
determining that a support structure for the part is needed based on the comparison of the aspect ratio to the threshold value; and
providing instructions to a 3D printer to print the part including the support structure.

2. The method of claim 1, further comprising prompting a user to select whether to provide the instructions to the 3D printer.

3. The method of claim 2, wherein the instructions to the 3D printer are provided following the user choosing to provide the instructions to the 3D printer.

4. The method of any of claims 1 to 3, where the support structure comprises a support that extends along the Z-axis of the printed part.

5. The method of claim 4, wherein the support structure extending along the Z-axis of the printed part comprises a lattice support.

6. The method of claim 4, wherein the support structure extending along the Z-axis of the printed part comprises an arch support.

7. The method of claim 4, wherein the support structure extending along the Z-axis of the printed part comprises a full support.
